Europäisches Patentamt

European Patent Office

Office européen des brevets

(11) Publication number: **0 013 628**

A1

(12) **EUROPEAN PATENT APPLICATION**

(21) Application number: **80300107.2**

(22) Date of filing: **11.01.80**

(51) Int. Cl.³: **F 16 C 33/60**

(30) Priority: **15.01.79 US 3386**

(43) Date of publication of application:
**23.07.80 Bulletin 80/15**

(84) Designated Contracting States:
**DE FR GB IT SE**

(71) Applicant: **THE TORRINGTON COMPANY**
**59 Field Street**
**Torrington Connecticut 06790(US)**

(72) Inventor: **Rollins, James William**
**Forest Avenue**
**Winsted, Connecticut 06098(US)**

(72) Inventor: **Wilson, Robert Lambert**
**L6 Squire Hill**
**Torrington, Connecticut 06790(US)**

(74) Representative: **Couch, Bernhard Charles et al,**
**W.P. THOMPSON & CO. Coopers Building, Church Street**
**Liverpool L1 3AB(GB)**

(54) **Roller bearing.**

(57) The invention provides a roller bearing which has a plurality of rollers each in contact with a discontinuous annular race. The race (10), which is made of a formed up sheet metal strip, has interfitting and interlocking circumferential ends on its periphery. The first interfitting end has a longitudinal centrally located head (19), a neck (22), and a pair of shoulders (20). Each shoulder (20) extends from the neck (22) to a longitudinal side of the annular race (10). The other interfitting end is complementarily shaped to receive the first interfitting end.

FIG. 1

EP 0 013 628 A1

Croydon Printing Company Ltd.

0013628

## DESCRIPTION
## ROLLER BEARING

This invention relates to roller bearings and is more particularly concerned with a roller or needle roller bearing including a new annular discontinuous race.

One method of making sheet metal shell-type races for roller bearings is a deep drawing metalworking technique. However, with the conventional deep drawing metalworking technique as much as 70 per cent of the flatstock used in a transfer machine becomes scrap from webs, bottom hole knockout, and clipping operations. The larger the bearing diameter, the greater the scrap loss becomes. Also, transfer machines to produce such a roller bearing race are extremely expensive, take a long time to manufacture, and may not be readily available.

Often, to avoid the waste and problems of conventional deep drawing metalworking, a narrow flat sheet metal strip with or without side flanges is wound into annular shape with a generally V-shaped joint at the circumferential ends of the strip to align the ends of the strip axially of the bearing and to smooth the passage of rollers across the interruption at the joint. However, handling problems are encountered when uncaged or unretained rollers or a unified roller-retainer assembly must be shipped and installed as a unit assembly with the annular race ring. Due to manufacturing and heat treatment, the V-shaped joint has a natural tendency to warp and to spring open which may allow the bearing components to separate and fall away from each other as the race strip ends misalign. These conditions require the use of special fixtures and handling equipment for installation of the bearing assembly as a unit.

According to the present invention, a roller bearing comprises a race, a plurality of rollers each in contact with said race, the race being a discontinuous annular member made of a formed up sheet metal strip which has interfitting ends on its periphery, the first interfitting end having a longitudinally centrally located head, a neck, and a pair of shoulders with each shoulder extending from the neck to a longitudinal side of the annular member, the other interfitting end being complementary shaped to receive said first interfitting end.

The invention provides the roller bearing making industry with a bearing which may be made from a strip of flat stock so that little or no material is wasted either during the rolling process to produce the channel or when forming the strip of flat stock into an annular shape and also includes a new race joint which guarantees proper interlocking and alignment of race circumferential ends during handling, shipping, and installation without cumbersome fixtures to guide the races and to hold the bearing components.

The invention as well as its many advantages may be further understood by reference to the following detailed description and drawings, which are given by way of example and in which:

Fig. 1 is an elevational view partly in section of a roller bearing embodying the invention;

Fig. 2 is a plan view of a cut-off length of sheet metal strip after a channel has been roll-formed into a strip of flat stock and the strip cut to a predetermined length with the end shapes to be interfitted formed on the ends of the cut-off length;

Fig. 3 is a view taken along line 3--3 of Fig. 2 and in the direction of the arrows; and

Fig. 4 is a view on an enlarged scale showing the interfitting portion after the cut-off length of Fig. 2 has been formed into an annular race.

In the various figures like parts are referred to by like numbers.

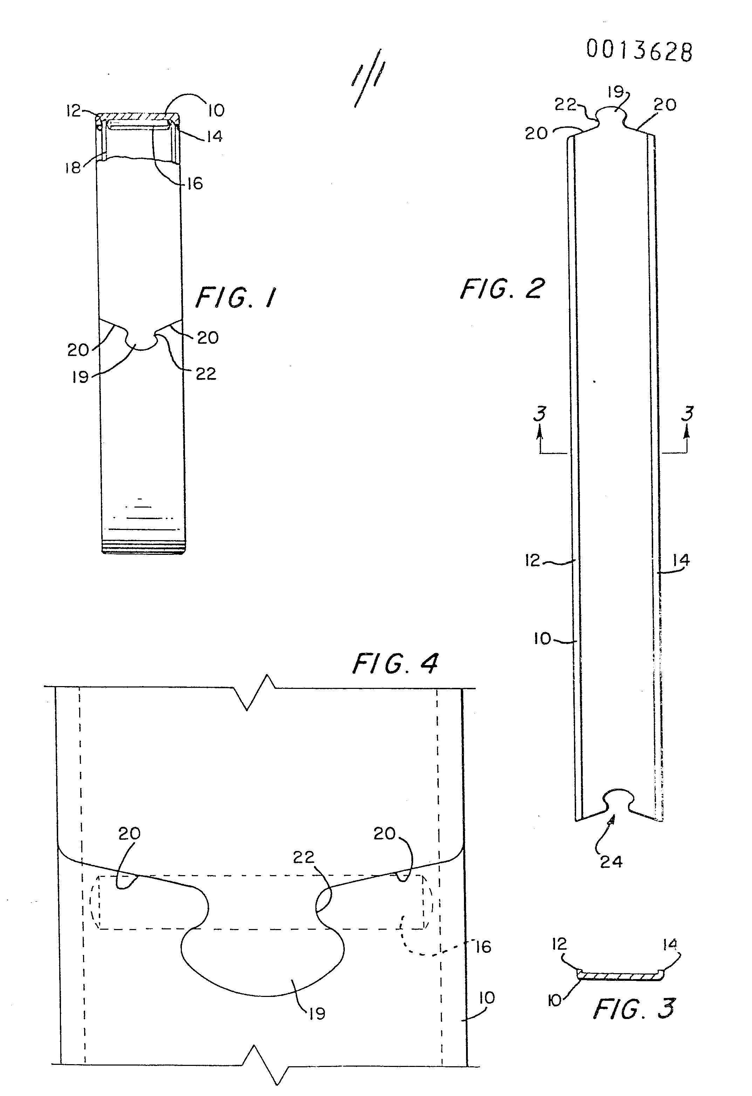

Referring to the drawings and more particularly to Fig. 1, the roller bearing includes an outer race 10 with end flanges 12 and 14. A plurality of rollers 16 each in contact with the outer race 10 are located in pockets of a roller cage 18. If desired, a cage 18 need not be used and a larger number of rollers 16 may then be included in the same race.

The outer race preferably is formed by roll forming a channel in strip flat stock although press forming may be used, cutting the resulting strip to a predetermined length and shaping the ends preferably simultaneously with the cutoff to provide the channel shaped strip shown in Fig. 2 and Fig. 3. The strip is provided with an end including a head 19 centrally located on the width of the strip. The head 19 is connected to a pair of shoulders 20 by means of neck 22 of lesser width than the head. Each of the shoulders 20 extends from the neck 22 to a side of the strip. The other end 24 (See Fig. 2) of the strip is complementary shaped so that when the strip is formed into the annular race 10 of Fig. 1, the edges form an interfit and interlock in the circumferential and axial directions on the periphery of the annular race.

Fig. 4 shows the interfit and interlock on the annular race 10. The shoulders 20 extend from the neck 22 at an angle to an imaginary plane perpendicular to the longitudinal sides of the outer race 10. The slanting or angling of the shoulders 20 which may be either straight or curved causes the roller 16 to roll past the interruption with the points of the interruption sequentially passing the roller so that the roller overlies a minimum number of points at the same time. This minimizes unwanted noise as the rollers roll past the interruption and maximizes load-carrying capacity at the joint if such is required.

The radial inner surfaces and the radial outer surfaces of the head 19, neck 22 and shoulders 20 are curved to match the curvature of the rest of the race 10.

It can be seen that this new bearing with the new race provides the art with a roller bearing having a sheet metal race with a joint shaped to prevent the joint from opening, to keep the assembly intact during handling, shipping, and use. It also guarantees proper alignment of the race ends during the press-fit installation without cumbersome fixtures to guide the races.

It is possible to make similar sheet metal races from two or more pieces using the same type of ends to interlock one piece to the next, but our preferred race is a single strip with a single interlocking connection of the ends. If desired, the joint can be bonded or welded together after interlocking. Also, if the race is axially relatively wide, multiple interlocks may be used to make one connection.

## CLAIMS

1. A roller bearing comprising: a race, a plurality of rollers each in contact with said race, the race being a discontinuous annular member made of a formed up sheet metal strip which has interfitting ends on its periphery, the first interfitting end having a longitudinally centrally located head, a neck, and a pair of shoulders with each shoulder extending from the neck to a longitudinal side of the annular member, the other interfitting end being complementary shaped to receive said first interfitting end.

2. A roller bearing in accordance with claim 1 wherein: said shoulders extend from the neck at an angle to an imaginary plane perpendicular to the longitudinal sides of the outer race.

3. A roller bearing in accordance with claim 2 wherein: the interfitting surfaces of the shoulders are straight and the interfitting surfaces of the neck and head are all curved.

0013628

FIG. 1

FIG. 2

FIG. 3

FIG. 4

0013628

European Patent Office

**EUROPEAN SEARCH REPORT**

Application number

EP 80 30 0107

## DOCUMENTS CONSIDERED TO BE RELEVANT

| Category | Citation of document with indication, where appropriate, of relevant passages | Relevant to claim |
|---|---|---|
| | DE - C - 611 076 (P. RUMMELSPACHER)<br>* fig. 10 and 12 *<br>-- | 1 |
| | DE - C - 851 147 (F.R. ZEUZEM et al.)<br>* fig. 4 *<br>-- | 1 |
| | FR - A - 1 505 844 (VEB LEIPZIGER KUGELLAGERFABRIK "DKF")<br>* fig. 7 and 8 *<br>-- | 1-3 |
| | GB - A - 799 126 (INDUSTRIEWERK SCHAEFFLER OHG)<br>* fig. 2 and 3 *<br>-- | 1 |
| | US - A - 1 651 815 (H.R. GIBBONS)<br>* fig. 1 to 4 *<br>-- | 1 |
| | US - A - 2 016 924 (K.L. HERRMANN)<br>* fig. 1 and 2 *<br>-- | 1 |
| | US - A - 3 242 463 (W.L. BOWEN III et al.)<br>* fig. 5 to 9 *<br>--<br>./.. | 1 |

**CLASSIFICATION OF THE APPLICATION (Int. Cl.³)**

F 16 C 33/60

**TECHNICAL FIELDS SEARCHED (Int.Cl.³)**

F 16 C 33/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X  The present search report has been drawn up for all claims

| Place of search | Date of completion of the search | Examiner |
|---|---|---|
| Berlin | 17-03-1980 | MASSALSKI |

EPO Form 1503.1   06.78

European Patent
Office

**EUROPEAN SEARCH REPORT**

0013628

Application number

EP 80 30 0107

page 2

| Category | Citation of document with indication, where appropriate, of relevant passages | Relevant to claim | |
|---|---|---|---|
| | **DOCUMENTS CONSIDERED TO BE RELEVANT** | | **CLASSIFICATION OF THE APPLICATION (Int. Cl.3)** |
| | US - A - 3 262 185 (C.W. HORNIGOLD)<br>* fig. 1 and 3 *<br><br>--<br><br>US - A - 3 343 893 (H. HALL)<br>* column 3, lines 62 to 68; fig. 7 *<br><br>---- | 1<br><br><br>1-3 | **TECHNICAL FIELDS SEARCHED (Int. Cl.3)** |